# FASCICULE DE BREVET EUROPEEN

(11) **EP 2 007 516 B1**
(45) Date de publication et mention de la délivrance du brevet: **10.07.2013**
(21) Numéro de dépôt: 07728268.9
(22) Date de dépôt: 18.04.2007
(51) Int. Cl.: B01J 19/00, F28D 9/00, F28F 3/04, H01M 8/06

(54) **SYSTEME D'ECHANGEUR DE CHALEUR COMPORTANT DES ZONES DE CIRCULATION FLUIDIQUE REVETUES DE FAÇON SELECTIVE PAR UN CATALYSEUR DE REACTION CHIMIQUE**
WÄRMETAUSCHERSYSTEM MIT FLUIDZIRKULATIONSZONEN, DIE SELEKTIV MIT EINEM KATALYSATOR FÜR CHEMISCHE REAKTIONEN BESCHICHTET SIND
HEAT EXCHANGER SYSTEM COMPRISING FLUID CIRCULATION AREAS SELECTIVELY COATED BY A CHEMICAL REACTION CATALYST

(30) Priorité: 20.04.2006 FR 0651389
(43) Date de publication de la demande: 31.12.2008
(73) Titulaire: Commissariat à l'Énergie Atomique et aux Énergies Alternatives, 75015 Paris (FR); Centre National de la Recherche Scientifique, 75016 Paris (FR); Renault s.a.s., 92100 Boulogne Billancourt (FR)
(72) Inventeur: GRUSS, Jean-Antoine, 38170 Seyssinet (FR); DUVAL-BRUNEL, Emmanuelle, 91120 Palaiseau (FR); VAN VEEN, André, 69003 Lyon (FR); MIRODATOS, Claude, 69003 Lyon (FR)
(74) Mandataire: Ilgart, Jean-Christophe
(86) Numéro de dépôt international: PCT/EP2007/053806
(87) Numéro de publication internationale: WO 2007/122167

(56) Documents cités:
- US-A1- 2001 018 140
- US-A1- 2003 072 699
- US-A1- 2004 154 788
- US-B1- 6 472 092

## Description

### DOMAINE TECHNIQUE

L'invention se rapporte de façon générale au domaine des échangeurs de chaleur, et préférentiellement à celui des micro-échangeurs pour lesquels les échanges thermiques obtenus sont très satisfaisants, en raison de l'important rapport entre les surfaces d'échange et le volume de l'échangeur.

L'invention concerne plus spécifiquement les systèmes d'échangeur thermique comprenant un empilement de plaques formant en alternance, selon une direction d'empilement des plaques, une première zone de circulation fluidique et une seconde zone de circulation fluidique, et conçus de manière à ce qu'il se produise une réaction chimique catalytique dans au moins l'une des ces zones de circulation fluidique. Ainsi, en raison de la réaction chimique catalytique rencontrée au sein d'au moins l'une de ces zones, de tels micro-échangeurs sont également appelés micro-réacteurs.

Il est noté que de nombreuses applications sont envisagées pour l'échangeur de chaleur selon la présente invention. A titre d'exemple illustratif, un tel système d'échangeur de chaleur peut prendre la forme d'un système de vaporeformage dans lequel une réaction chimique catalytique exothermique (par exemple une réaction de combustion) se produit au sein des premières zones de circulation fluidique, et une réaction endothermique de vaporeformage visant à générer de l'hydrogène se produit au sein des secondes zones de circulation fluidique. Il est précisé que ce type de système de vaporeformage peut être utilisé dans une installation de pile à combustible en vue d'alimenter l'anode de la pile en hydrogène.

A ce titre, l'invention concerne également une telle installation de pile à combustible équipée du système de vaporeformage susmentionné, cette installation de pile trouvant naturellement une multitude d'applications parmi les applications embarquées (industrie automobile, navale), et les applications stationnaires et mobiles.

### ETAT DE LA TECHNIQUE ANTERIEURE

Dans l'application particulière indiquée ci-dessus concernant le vaporeformage, il est en effet classiquement utilisé un micro-échangeur de chaleur comprenant un empilement de plaques formant en alternance, selon une direction d'empilement des plaques, une première zone de circulation fluidique et une seconde zone de circulation fluidique, une réaction chimique catalytique exothermique se produisant au sein de chaque première zone de circulation fluidique, et une réaction endothermique de vaporeformage visant à générer de l'hydrogène se produisant au sein de chaque seconde zone de circulation fluidique.

Avec une telle configuration, l'énergie nécessaire à la réaction endothermique de vaporeformage est apportée par la chaleur dégagée par la réaction chimique catalytique produite dans les premières zones, cette réaction étant par exemple du type réaction de combustion.

Dans les réalisations de l'art antérieur, l'empilement de plaques est effectué de manière à obtenir une alternance entre des plaques micro-structurées dédiées au vaporeformage, et des plaques micro-structurées dédiées à la réaction de combustion, ces dernières étant également appelées plaques de brûleur. Chacune de ces plaques, et en particulier les plaques de brûleur, présente au niveau de l'une de ses deux faces un réseau de canaux parallèles dans lequel un catalyseur approprié a été déposé, habituellement sur toute la longueur des canaux cheminant le long de cette plaque.

De plus, ces canaux ou micro-canaux rectilignes et parallèles relient directement un distributeur principal de fluide situé à l'entrée des canaux, et un collecteur principal de fluide situé à la sortie de ces mêmes canaux, ces distributeur et collecteur étant respectivement disposés à proximité de deux extrémités opposées de la plaque concernée.

La réaction de combustion catalytique observée dans les plaques de brûleur s'effectuant très rapidement, surtout en présence d'hydrogène, elle se produit donc inévitablement en grande partie au niveau de l'entrée des différents canaux parallèles. Cela a pour inconvénient majeur de générer la présence de points chauds au niveau de cette partie amont du brûleur, ce qui a non seulement pour conséquence d'interdire une homogénéité surfacique de la température au niveau des plaques de brûleur, mais également d'augmenter fortement les risques de formation d'oxydes d'azote au sein des premières zones de circulation fluidique. En effet, si par exemple la température requise pour assurer la réaction de vaporeformage d'essence dans les plaques de vaporeformage est d'environ 750°C, il est noté que la formation néfaste d'oxydes d'azote dans les plaques de brûleur est fortement favorisée dès lors que la température de ces mêmes plaques atteint la valeur de 920°C, valeur qui peut pourtant être facilement atteinte à l'entrée des canaux où s'effectue la majeure partie de la réaction catalytique de combustion. Par ailleurs, il est bien évident que l'apparition de ces points chauds engendre des contraintes, thermiques extrêmement importantes sur les plaques, de sorte qu'il est nécessaire de choisir des matériaux appropriés, souvent coûteux.

Il est également précisé que l'absence d'homogénéité surfacique de la température au niveau des plaques de brûleur ne peut que se traduire par une absence d'homogénéité surfacique de la température au niveau des plaques de vaporeformage, qui sont à leur tour susceptibles de présenter des points chauds. D'autre part, certaines autres partie des plaques de vaporeformage peuvent à l'inverse ne pas présenter une température suffisante pour permettre la réaction de vaporeformage, du fait du manque d'uniformité dans l'apport d'énergie procuré par la réaction catalytique de combustion.

Enfin, les points chauds sont également néfastes pour le catalyseur, dans la mesure où ils sont susceptibles d'une part de nuire à l'accrochage de la couche catalytique sur les parois, et d'autre part de dégrader irréversiblement l'activité catalytique de cette même couche.

Pour résoudre ce problème global d'homogénéité surfacique de la température des plaques du système d'échangeur, plusieurs solutions ont été proposées dans l'art antérieur, parmi lesquelles on compte celle visant à injecter le carburant et/ou l'air à différents points dans les plaques de brûleur. Néanmoins, cette solution n'apparaît pas satisfaisante en raison de la complexification du système d'injection d'air et/ou du système d'injection de carburant qu'elle requiert.

Une autre solution envisagée a été de diminuer la richesse du mélange air/carburant introduit dans les plaques de brûleur, afin de limiter la température de flamme à une certaine valeur (920°C pour le vaporeformage d'essence), au-delà de laquelle on observe la formation néfaste d'oxydes d'azote. Cependant, les bilans thermiques ont démontré que cette solution entraînait une forte surconsommation en carburant dans le brûleur, et par conséquent une chute drastique du rendement du système de vaporeformage associé. Le document US 2001/018140 décrit

une plaque comprenant un réseau de canaux destinée à être empilée.

### EXPOSÉ DE L'INVENTION

L'invention a donc globalement pour but de proposer une plaque destinée à être intégrée dans un empilement de plaques d'un système d'échangeur, ainsi qu'un tel système d'échangeur de chaleur, ces éléments remédiant au moins partiellement aux inconvénients mentionnés ci-dessus relatifs aux réalisations de l'art antérieur.

Pour ce faire, l'invention a tout d'abord pour objet une plaque destinée à être intégrée dans un empilement de plaques d'un système d'échangeur de chaleur, selon la revendication 1.

Par conséquent, la répartition sélective du catalyseur dans des canaux élémentaires répartis en rangées espacées sur la plaque permet globalement d'obtenir une grande homogénéité surfacique de la température de cette plaque, que celle-ci soit destinée à être le siège d'une réaction catalytique endothermique ou exothermique. Les canaux élémentaires prévus dans la présente invention sont, comparativement à ceux rencontrés dans l'art antérieur, plus nombreux et plus courts en longueur, de sorte qu'il est possible de mieux répartir les points chauds/froids sur la plaque. Effectivement, avec la géométrie spécifique à la présente invention, les entrées des canaux élémentaires peuvent elles-mêmes être réparties de façon homogène sur toute la face de la plaque concernée, et non plus toutes confinées à proximité d'une extrémité de la plaque comme cela était rencontré antérieurement. De plus, le nombre de canaux étant augmenté et la quantité de carburant la même, les points chauds/froids observés à l'entrée de ces canaux élémentaires sont non seulement mieux répartis, mais également de températures plus acceptables.

Par ailleurs, les effets de conduction axiale dans les plaques permettent d'obtenir une limitation des points chauds/froids d'autant plus prononcée que les canaux élémentaires sont de faible longueur.

Enfin, dans cette solution où la réaction catalytique se produit exclusivement dans les canaux élémentaires et non dans les autres parties dans la zone de circulation fluidique telles que les espaces inter-rangées, la faible longueur des canaux élémentaires permet de minimiser sensiblement les pertes de pression, autorisant ainsi une réduction de la taille des périphériques destinés à équiper le système d'échangeur, comme les pompes, compresseurs, etc).

La zone de circulation fluidique comporte également une entrée de fluide et une sortie de fluide, un distributeur principal de fluide débouchant dans l'entrée, ainsi qu'un collecteur principal de fluide débouchant dans la sortie. On prévoit alors que le distributeur principal et le collecteur principal s'étendent chacun globalement selon la seconde direction, et qu'ils se situent respectivement au niveau de deux extrémités opposées, considérées selon la première direction, du réseau de canaux formé par la pluralité de rangées.

Par ailleurs, la zone de circulation comporte une pluralité de distributeurs secondaires de fluide chacun débouchant dans le distributeur principal de fluide et situé entre deux rangées de canaux élémentaires directement consécutives, ainsi qu'une pluralité de collecteurs secondaires de fluide chacun débouchant dans le collecteur principal de fluide et également situé entre deux rangées de canaux élémentaires directement consécutives.

Plus préférentiellement, entre deux rangées de canaux élémentaires directement consécutives, le distributeur secondaire de fluide destiné à alimenter en fluide les canaux élémentaires de l'une des deux rangées, et le collecteur secondaire de fluide destiné à collecter le fluide s'échappant des canaux élémentaires de l'autre des deux rangées, sont séparés par un élément de paroi incliné dans les première et seconde directions. Avec la présence de cet élément de paroi formant séparation, on s'assure alors d'une part que les canaux élémentaires de chacune des rangées soient tous alimentés par du fluide provenant de l'entrée et qui n'a pas déjà réagi dans un autre canal de la zone, et d'autre part que le fluide sortant de chacun des canaux élémentaires soit évacué vers le collecteur principal sans pouvoir rejoindre l'entrée d'autres canaux.

A titre indicatif, pour obtenir au mieux les effets précités, on peut faire en sorte que l'élément de paroi soit raccordé à une paroi latérale de l'une des deux rangées qui se situe la plus à l'extrémité de cette rangée selon la première direction, et également raccordé à une paroi latérale de l'autre des deux rangées qui se situe la plus à l'extrémité de cette autre rangée, selon une direction opposée à la première direction.

Ainsi, les distributeur et collecteur principaux, et distributeurs et collecteurs secondaires disposent chacun d'une forme sensiblement triangulaire en vue de dessus, qui permet de répartir et d'évacuer au mieux le fluide transitant dans les canaux élémentaires.

De préférence, l'entrée de fluide et la sortie de fluide se situent respectivement au niveau de deux extrémités opposées, considérées selon la seconde direction, du réseau de canaux formé par la pluralité de rangées.

A titre indicatif, chaque canal élémentaire dispose d'une largeur comprise entre environ 0,1 et 1 mm, cette plaque étant préférentiellement destinée à être intégrée au sein d'un micro-échangeur de chaleur.

De plus, chaque canal élémentaire du réseau de canaux est au moins partiellement revêtu du catalyseur, de préférence sur toute sa longueur, et préférentiellement sur toute sa paroi.

Toujours à titre indicatif, le catalyser est réalisé dans un matériau pris parmi le groupe constitué des alliages fer/nickel, des polymères et des céramiques, ces derniers étant des matériaux réfractaires tout à fait adaptés pour générer/supporter une réaction de combustion catalytique d'hydrocarbures. Néanmoins, il est noté que d'autres matériaux métalliques peuvent bien entendu être envisagés, en fonction de différents paramétres tels que le matériau constitutif de la plaque, le procédé de fabrication de celle-ci, le mode de dépôt de ce catalyseur, la température de fonctionnement, et la tenue du matériau aux réactifs et aux produits de réaction.

Selon un mode de réalisation préféré, l'autre des deux faces de la plaque délimite également une autre zone de circulation fluidique, qui peut présenter une conception identique ou similaire à la première zone décrite ci-dessus. Dans un te.l cas, on prévoit alors que cette autre zone de circulation fluidique est au moins partiellement revêtue d'un catalyseur autorisant une réaction chimique catalytique au sein de cette seconde zone, de préférence avec une répartition sélective du catalyseur dans les seuls canaux élémentaires répartis en rangées.

Dans cette configuration où les deux faces de la plaque sont micr.o-structurées, chacune d'elles présente donc une zone de circulation fluidique prévue pour recevoir un fluide destiné à effectuer un échange thermique avec le fluide prévu pour circuler dans l'autre zone de circulation fluidique de la plaque.

L'invention a également pour objet un système d'échangeur de chaleur comprenant un empilement de plaques formant en alternance, selon une direction d'empilement des plaques, une première zone de circulation fluidique et une seconde zone de circulation fluidique, la première zone de circulation fluidique étant au moins partiellement revêtue d'un catalyseur autorisant une réaction chimique catalytique au sein de cette première zone. Selon l'invention, au moins l'une des plaques de l'empilement est une plaque telle que celle définie ci-dessus, permettant à l'aide de sa zone de circulation fluidique de former au moins partiellement l'une des premières zones de circulation fluidique du système d'échangeur.

Naturellement, il est indiqué qu'une telle plaque objet de la présente invention et décrite ci-dessus peut non seulement être intégrée au sein de l'empilement pour former au moins partiellement l'une desdites premières zones de circulation fluidique avec sa propre zone de circulation fluidique, mais également être intégrée dans l'empilement pour former au moins partiellement l'une des secondes zones de circulation fluidique, lorsque celles-ci sont également le siège d'une réaction chimique catalytique. A ce titre, on envisage donc effectivement, de façon non limitative, que chaque seconde zone de circulation fluidique du système d'échangeur soit également au moins partiellement revêtue d'un catalyseur autorisant une réaction chimique catalytique au sein de cette seconde zone.

De préférence, l'empilement précité est entièrement réalisé avec de telles plaques selon la présente invention, de sorte que celles-ci forment la totalité des premières et secondes zones de circulation fluidique du système d'échangeur. Néanmoins, il serait par exemple possible de prévoir un empilement alternant des plaques micro-structuées selon la présente invention définissant chacune au moins partiellement une première zone de circulation, et des plaques quelconques définissant chacune au moins partiellement une seconde zone de circulation, revêtue ou non d'un catalyseur, sans sortir du cadre de l'invention.

De même, ici encore, le système d'échangeur selon l'invention peut être conçu de manière à faire circuler le fluide chaud, par exemple issu d'une réaction chimique catalytique exothermique, dans les premières zones, et faire circuler le fluide froid, par exemple issu d'une réaction chimique catalytique endothermique, dans les secondes zones, ou inversement.

Enfin, il est indiqué que les premières et secondes zones de circulation peuvent naturellement adopter une géométrie différente.

Un autre objet de la présente invention concerne un système de vaporeformage comportant un tel système d'échangeur, ce système de vaporeformage étant conçu de sorte qu'une réaction chimique catalytique exothermique se produise au sein de chaque première zone de circulation fluidique, et de sorte qu'une réaction endothermique de vaporeformage visant à générer de l'hydrogène se produise au sein de chaque seconde zone de circulation fluidique.

Bien entendu, cette application du système d'échangeur au vaporeformage n'est en aucun cas limitative, et peut s'étendre à tout système dans lequel il est prévu un échange de chaleur entre un premier fluide traversant les premières zones et un second fluide traversant les secondes zones, la réaction chimique catalytique au sein des premières zones de circulation pouvant indifféremment être à caractère exothermique ou endothermique, en fonction des besoins rencontrés.

Parmi les applications possibles de l'invention, on compte donc le reformage à l'eau et/ou le reformage au dioxyde de carbone d'hydrocarbures ou d'alcools tels que le méthane, l'essence, le diesel, le kérosène, l'éthanol, le méthanol ou autres. Le mélange eau et/ou dioxyde de carbone et hydrocarbure ou alcool à reformer circule et réagit de façon endothermique dans une première zone, alors que circule dans la deuxième zone de l'échangeur un fluide de réchauffage ou un mélange hydrocarbures (ou alcool) / air produisant une réaction exothermique. Cette réaction exothermique peut être par exemple une combustion catalytique ou une réaction d'oxydation préférentielle (PrOx).

On compte aussi la déshydrogénation catalytique du méthylcyclohexane : (cycloalcane en général). Dans la première zone de l'échangeur circule du méthylcyclohexane et toluène où se produit une réaction endothermique de déshydrogénation catalytique, la deuxième zone étant constituée d'un brûleur alimenté en toluène et en hydrogène. Les niveaux de température sont plus bas que pour le vaporeformage d'essence, la réaction de déshydrogénation se faisant aux alentours de 375° C. Néanmoins, la température dans le réacteur doit être la plus homogène possible pour ne pas détériorer les catalyseurs.

Il peut aussi s'agir de la combustion catalytique pour la vaporisation d'un fluide. Le mélange hydrocarbures (ou alcool) / air circule dans une première zone de l'échangeur et produit une réaction exothermique, alors que circule dans la deuxième zone un fluide qui se vaporise, phénomène qui est endothermique. Le fluide se vaporisant peut par exemple être l'eau destinée à être utilisée dans un « reformer » et qui est préchauffée, vaporisée et surchauffée par ce système.

On compte également la combustion catalytique pour des dispositifs de génération de courant électrique à conversion thermoélectrique (effet Peltier, thermoïonique ou autres principes à état solide). Dans ce cas circule et réagit de manière exothermique dans une des zones un mélange hydrocarbures (ou alcool) / air, alors que circule dans la deuxième zone de l'échangeur un fluide de refroidissement (air, huile, eau, réfrigérant, etc.), le système de conversion thermoélectrique étant inséré entre les 2 zones.

Il peut aussi s'agir de la combustion catalytique pour des systèmes de réchauffage de fluides, mini réchauds (portables par exemple). Dans ce cas circule et réagit de manière exothermique dans une des zones un mélange hydrocarbures (ou alcool) / air, alors que circule dans la deuxième zone de l'échangeur le fluide à réchauffer (air, huile, eau, etc.).

Enfin, on peut également citer la combustion catalytique pour des systèmes de génération de froid compacts par systèmes thermodynamiques ou thermochimiques nécessitant donc une source chaleur (cycles à combustion externe de type Stirling, tubes pulsés, systèmes thermo acoustiques, machines à adsorption ou à absorption, etc.). Dans ce cas circule et réagit de manière exothermique dans une des zones un mélange hydrocarbures (ou alcool) et air, alors que circule dans la deuxième zone le fluide à réchauffer qui peut être un gaz de type air, hélium, hydrogène, etc., ou un liquide (par exemple ammoniac) adapté au cycle thermodynamique ou thermochimique.

Enfin, l'invention a pour objet une installation de pile à combustible comprenant une pile à combustible et un système de vaporeformage destiné à produire de l'hydrogène afin de le délivrer à ladite pile à combustible, ce système de vaporeformage étant tel que celui décrit ci-dessus, c'est-à-dire constitué à partir d'un système d'échangeur selon la présente invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique d'une installation de pile à combustible selon un mode de réalisation préféré de la présente invention ;
- la figure 2 représente une vue partielle en coupe du système de vaporeformage équipant l'installation montrée sur la figure 1, et se présentant sous la forme d'un mode de réalisation préféré de la présente invention;
- la figure 3 représente une vue détaillée en perspective d'une plaque faisant partie intégrante du système de vaporeformage montré sur la figure 2, cette plaque se présentant sous la forme d'un mode de réalisation préféré de la présente invention;
- la figure 4a montre une vue de dessus de la plaque montrée sur la figure 3 ;
- la figure 4b montre une vue similaire à celle de la figure 4a, la plaque se présentant sous la forme d'un autre mode de réalisation préféré de la présente invention ; et
- la figure 5 représente une vue partielle en coupe du système de vaporeformage équipant l'installation montrée sur la figure 1, et se présentant sous la forme d'un autre mode de réalisation préféré de la présente invention.

### EXPOSÉ DÉTAILLÉ DE MODES DE RÉALISATION PRÉFÉRÉS

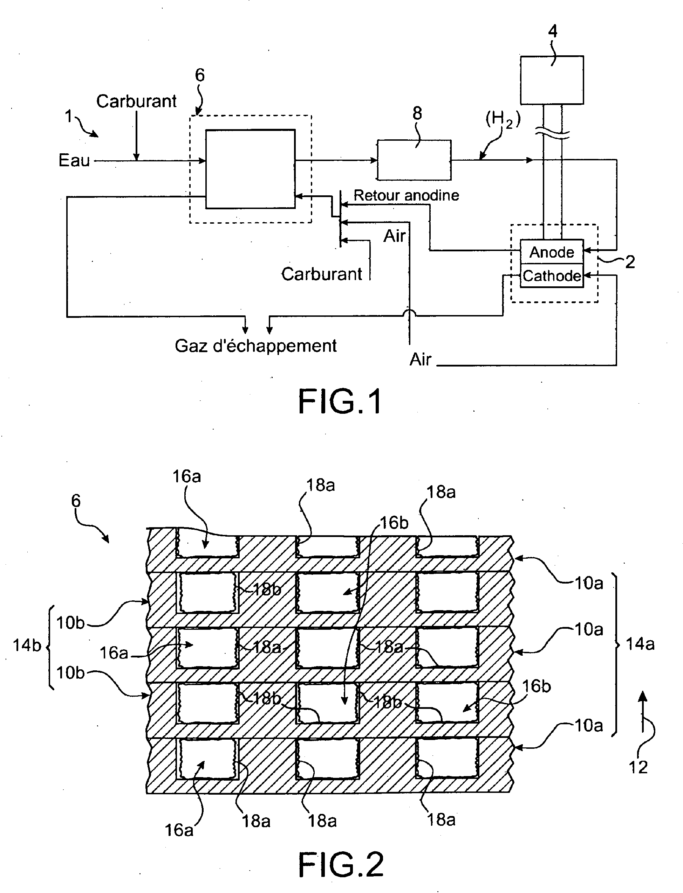

En référence tout d'abord à la figure 1, on peut voir une installation 1 de pile à combustible selon un mode de réalisation préféré de la présente invention.

Cette installation 1 intègre donc une pile à combustible 2, par exemple du type pile PEMFC (de l'anglais « Proton Exchange Membrane Fuel Cell »), comprenant une membrane échangeuse de protons comme électrolyte. De façon connue de l'homme du métier, une pile à combustible est un ensemble comportant généralement une pluralité de cellules élémentaires empilées les unes sur les autres. Dans chacune des cellules élémentaires de la pile à combustible, une réaction électrochimique se crée entre deux réactifs qui sont introduits de manière continue dans les cellules élémentaires. Le combustible (l'hydrogène) est amené au contact de l'anode, tandis que le comburant (l'oxygène) est amené au contact de la cathode, cette dernière étant séparée de l'anode par l'intermédiaire de l'électrolyte du type membrane échangeuse d'ions.

Au niveau de l'anode, il se produit une réaction d'oxydation du combustible, représentée par le schéma réactionnel suivant :

2H₂ → 4H⁺ + 4e⁻

De la même manière, au niveau de la cathode, il se produit une réaction de réduction de l'oxydant, selon le schéma réactionnel suivant:

O₂ + 4H⁺ + 4e⁻ → 2H₂O

On assiste alors à une réaction électrochimique dont l'énergie créée est convertie en énergie électrique. Des protons H⁺ circulent de l'anode en direction de la cathode en traversant l'électrolyte, pour rejoindre une entité extérieure 4 afin de concourir à la production d'énergie électrique. A titre indicatif, cette entité 4 peut être un moteur électrique, une batterie, un réseau électrique, etc.

D'autre part, l'installation 1 comporte un système de vaporeformage 6 également objet de la présente invention, et dont la fonction principale réside dans la production d'hydrogène à partir d'un carburant, tel qu'un carburant liquide du type essence, gazole, alcool (éthanol), ou encore tel qu'un carburant gazeux du type GPL, GNV, méthane, gaz de synthèse, etc.

L'hydrogène obtenu à partir de ce système de vaporeformage 6, dont la conception sera décrite en détails ci-après, est de façon connue dirigé vers l'anode de la pile 2 après que le reformat contenant cet hydrogène ait transité par un purificateur 8, comme cela est représenté schématiquement sur la figure 1. En effet, le reformat issu du système de vaporeformage 6 est riche en hydrogène, mais contient une quantité importante de monoxyde de carbone CO qui constitue un poison des catalyseurs de la pile 2, et qui doit donc être réduite au maximum par l'intermédiaire de ce purificateur 8.

Enfin, l'installation 1 comporte un ensemble d'équipements auxiliaires permettant le bon fonctionnement de cette installation, équipements.parmi lesquels on compte des circuits d'air, d'eau, de refroidissement, etc.

Plus particulièrement en ce qui concerne le système de vaporeformage 6, ce dernier comporté de façon connue une partie vaporeformage dans laquelle une réaction endothermique de vaporeformage se produit afin de générer de l'hydrogène destiné à alimenter l'anode de la pile 2, et une partie brûleur au sein de laquelle se produit une réaction de combustion catalytique exothermique destinée à apporter l'énergie nécessaire à la réaction de vaporeformage précitée.

Ainsi, la partie vaporeformage est alimentée par un mélange d'eau et de carburant pour produire le reformat susmentionné, tandis que la partie brûleur est alimentée par un mélange hautement réactif d'air et de carburant, qui, après combustion, produit des gaz d'échappement qui sont extraits du système 6, comme cela est montré schématiquement sur la figure 1.

En référence à présent à la figure 2, on peut apercevoir de façon plus détaillée une partie du système de vaporeformage 6, ce dernier étant globalement formé à l'aide d'un système d'échangeur de chaleur présentant un empilement de plaques métalliques 10a, 10b empilées selon une direction d'empilement orthogonale à ces mêmes plaques, symbolisée schématiquement par la flèche 12. A titre indicatif, les plaques de cet empilement peuvent être assemblées les unes aux autres à l'aide d'une technique classique de soudage-diffusion.

Ainsi, des premières plaques 10a ou plaques de brûleur forment conjointement la partie brûleur 14a du système 6, ces plaques 10a alternant avec des secondes plaques 10b ou plaques de vaporeformage, formant quant à elles la partie vaporeformage 14b de ce même système.

Dans ce mode de réalisation préféré du système de vaporeformage 6, assimilable donc à un système d'échangeur de chaleur du fait de l'échange thermique rencontré entre la partie brûleur 14a et la partie vaporeformage 14b, chacune des plaques précitées dispose d'une face plane et d'une face opposée dite micro-structurée, formant une zone de circulation fluidique pourvue notamment d'une pluralité de canaux ou micro-canaux. Comme on peut clairement l'apercevoir sur la figure 2, chaque face micro-structurée d'une plaque 10a, 10b est en contact avec la face plane de la plaque lui étant directement consécutive dans la direction d'empilement 12, et inversement.

Ainsi, les plaques métalliques empilées 10a, 10b forment en alternance, selon la direction 12, une première zone de circulation fluidique 16a et une seconde zone de circulation fluidique 16b, chacune de ces premières et secondes zones 16a, 16b étant respectivement au moins partiellement revêtues d'un catalyseur 18a, 18b autorisant une réaction chimique catalytique au sein de ces zones.

Bien entendu, le catalyseur 18a est ici prévu pour assurer la combustion catalytique dans les plaques 10a de la partie brûleur 14a, tandis que le catalyseur 18b est prévu pour assurer la réaction catalytique de vaporeformage dans les plaques 10b de la partie vaporeformage 14b.

A titre indicatif, il est précisé que la géométrie des zones de circulation fluidique délimitées par les plaques 10a est de préférence parfaitement confondue, en vue prise selon la direction d'empilement 12, avec la géométrie des zones de circulation fluidique délimitées par les plaques 10b, même si un décalage entre ces deux géométries pourrait alternativement être envisagé, sans sortir du cadre de l'invention. Dans ce mode de réalisation préféré où chaque zone de circulation fluidique délimitée sur la face structurée d'une plaque 10a, 10b constitue l'une desdites premières ou secondes zones de circulation fluidique 14a, 14b du système de vaporeformage, il est donc préférentiellement prévu d'adopter une conception identique ou similaire pour les plaques de brûleur 10a et les plaques de vaporeformage 10b.

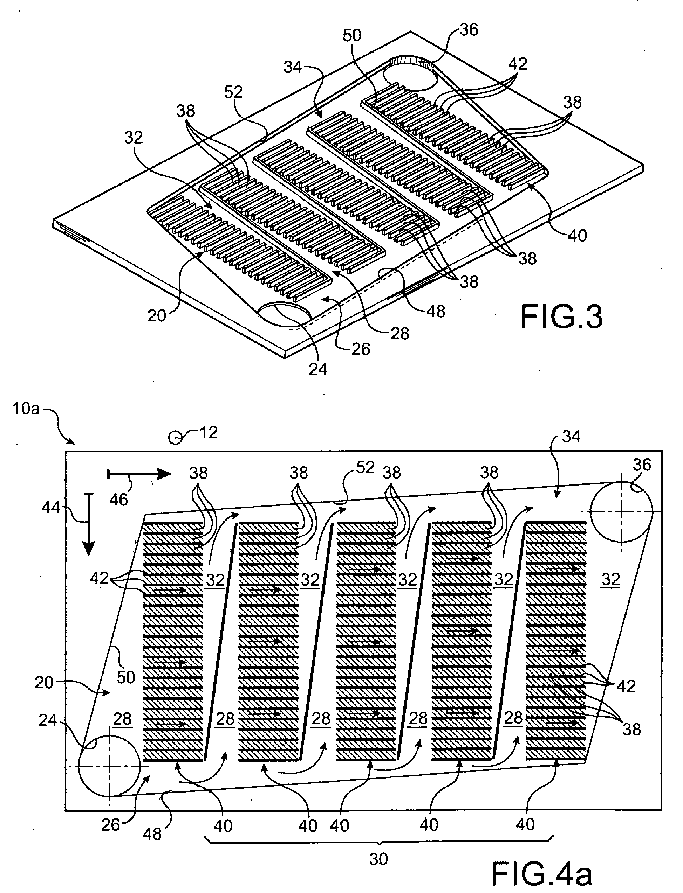

Pour cette raison, seule une plaque de brûleur 10a de l'empilement montré sur la figure 2 va à présent être décrit de manière détaillée, en référence conjointement aux figures 3 et 4a.

Sur ces figures, on peut voir que la plaque de brûleur 10a comporte une zone de circulation fluidique 20 au niveau de l'une de ses deux faces dite micro-structurée, qui est opposée à l'autre face sensiblement plane.

La zone de circulation fluidique 20, qui est destinée à constituer l'une des premières zones de circulation fluidique 16a du système de vaporeformage montré sur la figure 2, comprend globalement une entrée de fluide 24 par laquelle arrive le mélange air/carburant destiné à la combustion catalytique, un distributeur principal de fluide 26 débouchant dans l'entrée 24, une pluralité de distributeurs secondaires de fluide 28 chacun débouchant dans le distributeur principal 26, un réseau de canaux 30, une pluralité de collecteurs secondaires de fluide 32 chacun débouchant dans un collecteur principal 34, et enfin une sortie de fluide 36 dans laquelle débouche le collecteur principal 34 et par laquelle s'échappent les gaz d'échappement résultant de la combustion observée dans le réseau de canaux 30.

Plus spécifiquement, le réseau de canaux 30 est préférentiellement entièrement constitué par une pluralité de canaux élémentaires 38, également dits canaux réactifs, qui sont répartis en rangées 40 sur la face micro-structurée de la plaque concernée, le nombre de ces rangées s'étendant parallèlement à la plaque étant par exemple de cinq, comme montré sur les figures 3 et 4a.

Chaque rangée 40 comporte une pluralité de parois latérales 42 en regard et espacées les unes des autres le long d'une première direction 44, dite direction de rangée, de manière à ce que deux de ces parois latérales 42 quelconques et directement consécutives dans la direction 44 délimitent l'un des canaux élémentaires 38 de la rangée 40.

Par ailleurs, ces rangées 40 de canaux élémentaires 38 sont en regard et espacées les unes des autres le long d'une seconde direction 46 perpendiculaire à la direction 44 précitée, cette direction correspondant également à la direction d'écoulement du fluide à travers les canaux élémentaires, étant donné que les parois latérales définissant ces derniers sont orientées selon cette même direction 46.

L'une des particularités de la présente invention réside dans le fait que dans la zone de circulation fluidique 20, seuls les canaux élémentaires 38, dont la disposition vient d'être décrite, sont au moins partiellement revêtus du catalyseur représenté schématiquement par le grisage sur la figure 4a. A ce titre, il est indiqué que le catalyseur est de préférence disposé sur toute la longueur de chaque canal 38, et préférentiellement sur chacune des deux parois latérales et sur le fond de chacun de ces canaux 38 de section sensiblement carrée ou rectangulaire, ou encore éventuellement arrondie, par exemple de manière à présenter la forme d'un U.

A titre d'exemple indicatif, la largeur des canaux 38 selon la direction 44, correspondant également à la direction de la largeur de la plaque 10a, peut être de l'ordre de 0,7 mm. Néanmoins, il est possible de prévoir une largeur comprise entre environ 0,1 et 1 mm. De plus, la profondeur des canaux 38 selon la direction d'empilement 12 peut être de l'ordre de 0,4 mm. Néanmoins, il est possible de prévoir une profondeur comprise entre environ 0,1 et 1 mm. En ce qui concerne l'espacement entre deux canaux 38 directement consécutifs d'une même rangée 40, selon la direction 44, celui-ci est fixé à environ 0,5 mm, mais peut être prévu entre environ 0,1 et 1 mm. Naturellement, cet espacement correspond à la largeur des parois latérales 42 selon cette même première direction 44. Toujours à titre indicatif, la longueur de chaque canal 38 selon la direction 46 peut être fixée aux alentours de 20 mm, et plus généralement entre environ 5 et 100 mm. Enfin, l'espacement entre deux rangées 40 directement consécutives, selon la direction 46, peut être fixé à environ 10 mm, et plus généralement entre environ 5 et 50 mm.

La répartition sélective du catalyseur opérée comme décrit ci-dessus implique donc que les autres parties constitutives de la zone de circulation empruntée par le fluide en fonctionnement, c'est-à-dire l'entrée 24, les distributeurs 26, 28, les collecteurs 32, 34 et la sortie 36, ne sont pas revêtus par ce même catalyseur. Cela permet globalement d'obtenir une grande homogénéité surfacique de la température de cette plaque 10a, puisque les canaux élémentaires 38 sont très nombreux, et que leurs entrées constituant la portion de chaque canal dans laquelle se produit la majeure partie de la réaction catalytique de combustion, peuvent elles-mêmes être réparties de façon relativement homogène sur toute la face micro-structurée de la plaque, du fait de la disposition en rangées espacées selon la direction 46.

A titre indicatif, il est noté que le nombre de canaux réactifs 38 est multiplié par le nombre de rangées 40 par rapport au nombre de canaux rencontrés sur les plaques similaires de l'art antérieur.

Toujours en référence aux figures 3 et 4a, le distributeur principal 26 et le collecteur principal 34 s'étendent chacun globalement selon la seconde direction 46, et se situent respectivement au niveau de deux extrémités opposées des rangées 40, considérées selon la première direction 44. A cet égard, le distributeur principal 26 est partiellement délimité par la dernière paroi latérale 42 de chacune des rangées 40, considérée dans la direction 44 telle que montrée sur la figure 4a. De plus, il est également délimité par une face latérale 48 légèrement inclinée par rapport à la direction 46, de manière en ce qu'en vue de dessus, ce distributeur 26 prenne grossièrement la forme d'un triangle initié par une petite base située au niveau de l'entrée 24 à proximité de la première rangée 40 considérée selon la direction 46, et s'étendant globalement dans la direction 46 vers un sommet opposé à cette petite base, ce sommet étant situé au niveau de la dernière rangée 40 considérée selon la direction 46. Ainsi, les deux grands côtés du triangle sont constitués respectivement par les dernières parois latérales 42 des rangées 40, et par la face 48.

Cette géométrie en triangle du distributeur principal 26 permet de garantir une répartition uniforme du fluide vers les distributeurs secondaires de fluide 28, qui débouchent chacun dans le distributeur principal 26 entre deux rangées 40 directement consécutives, et qui sont chacun associé à une rangée 40 donnée. Plus précisément, chaque distributeur secondaire 28 est partiellement délimité par les entrées de canaux 38 de la rangée 40 associée. De plus, il est également délimité par un élément de paroi 50 situé entre deux rangées 40 et incliné dans les première et seconde directions 44, 46, de manière en ce qu'en vue de dessus, ce distributeur 28 prenne grossièrement la forme d'un triangle initié par une petite base située au niveau du raccordement avec le distributeur principal 26, c'est-à-dire au niveau de la dernière paroi latérale 42 considérée selon la direction 44, et s'étendant globalement dans une direction opposée à la direction 44 vers un sommet opposé à cette petite base, ce sommet étant situé au niveau de la première paroi latérale 42 de la rangée associée, toujours considérée selon la direction 44. Ainsi, les deux grands côtés du triangle sont constitués respectivement par les entrées des canaux 38, et par l'élément 50.

Ici encore, la géométrie en triangle des distributeurs secondaires 28 permet de garantir une répartition uniforme du fluide vers les entrées des canaux 38, qui débouchent toutes dans leur distributeur secondaire 28 associé.

Pour toutes les rangées 40 à l'exception de la première, considérée dans la direction 46, l'élément de paroi 50 situé dans un espace inter-rangées est raccordé à la paroi latérale 42 de la rangée non alimentée qui se situe la plus à l'extrémité de cette rangée selon la première direction 44, à savoir la dernière rangée. De plus, il est également raccordé à la paroi latérale 42 de la rangée alimentée qui se situe la plus à l'extrémité de cette rangée selon une direction opposée à ladite première direction 44, c'est-à-dire la première paroi 42 selon la première direction 44.

En ce qui concerne le distributeur secondaire 28 alimentant la première rangée 40, son élément de paroi 50 est situé parallèlement aux autres, et définit au même titre que la face latérale 48 une limite de la zone de circulation fluidique 20, prenant grossièrement la forme d'un parallélogramme. L'une des deux extrémités de cet élément de paroi 50 est donc raccordée à la première paroi latérale 42 de la première rangée 40, considérées selon les directions 44, 46, tandis que son autre extrémité se situe à proximité de l'entrée de fluide 24, et vient assurer la jonction avec la face latérale 48 précitée.

Toujours en référence aux figures 3 et 4a, on peut voir que le collecteur principal 34 est partiellement délimité par la première paroi latérale 42 de chacune des rangées 40, considérée dans la direction 44 telle que montrée sur la figure 4a. De plus, il est également délimité par une face latérale 52 légèrement inclinée par rapport à la direction 46, de manière en ce qu'en vue de dessus, ce collecteur 34 prenne grossièrement la forme d'un triangle initié par une petite base située au niveau de la sortie 36 à proximité de la dernière rangée 40 considérée selon la direction 46, et s'étendant globalement dans la direction opposée à la direction 46 vers un sommet opposé à cette petite base, ce sommet étant situé au niveau de la première rangée 40 considérée selon la direction 46. Ainsi, les deux grands côtés du triangle sont constitués respectivement par les premières parois latérales 42 des rangées 40, et par la face 52.

Cette géométrie en triangle du collecteur principal 34 permet de garantir une évacuation uniforme du fluide provenant de.s collecteurs secondaires de fluide 32, qui débouchent chacun dans le collecteur principal 34 entre deux rangées 40 directement consécutives, et qui sont chacun associé à une rangée 40 donnée. Plus précisément, chaque collecteur secondaire 32 est partiellement délimité par les sorties de canaux 38 de la rangée 40 associée. De plus, il est également délimité par l'élément de paroi 50 précité, situé entre deux rangées 40 et incliné dans les première et seconde directions 44, 46, de manière en ce qu'en vue de dessus, ce collecteur 32 prenne grossièrement la forme d'un triangle initié par une petite base située au niveau du raccordement avec le collecteur principal 34, c'est-à-dire au niveau de la première paroi latérale 42 considérée selon la direction 44, et s'étendant globalement dans la direction 44 vers un sommet opposé à cette petite base, ce sommet étant situé au niveau de la dernière paroi latérale 42 de la rangée associée, toujours considérée selon la direction 44. Ainsi, les deux grands côtés du triangle sont constitués respectivement par les sorties des canaux 38, et par l'élément 50.

Ici encore, la géométrie en triangle des collecteurs secondaires 32 permet de garantir une évacuation uniforme du fluide provenant des sorties des canaux 38, qui débouchent toutes dans leur collecteur secondaire 32 associé.

Comme mentionné précédemment, pour toutes les rangées 40 à l'exception de la dernière, considérée dans la direction 46, l'élément de paroi 50 situé dans l'espace inter-rangées est raccordé à deux parois latérales 42 opposées, appartenant respectivement aux deux rangées 40 consécutives. En ce qui concerne le collecteur secondaire 32 permettant l'évacuation de fluide issu de la dernière rangée 40, son élément de paroi 50 est situé parallèlement aux autres, et. définit au même titre que la face latérale 52 une limite de la zone de circulation fluidique 20. L'une des deux extrémités de cet élément de paroi 50 est donc raccordée à la dernière paroi latérale 42 de la dernière rangée 40, considérées selon les directions 44, 46, tandis que son autre extrémité se situe à proximité de la sortie de fluide 36, et vient assurer la jonction avec la face latérale 52 précitée. Par conséquent, les petits côtés de la zone 20 en forme de parallélogramme sont constitués par les deux éléments 50 situés aux deux extrémités opposées de la plaque 10a, dans la direction 46, tandis que les grands côtés du parallélogramme sont constitués par les faces 48 et 52.

Enfin, comme cela apparaît sur les figures 3 et 4a, il est noté que l'entrée 24 et la sortie 36, respectivement disposées à proximité des deux sommets les plus éloignés du parallélogramme, peuvent chacune prendre la forme d'un orifice traversant la plaque 10a selon la direction d'empilement 12.

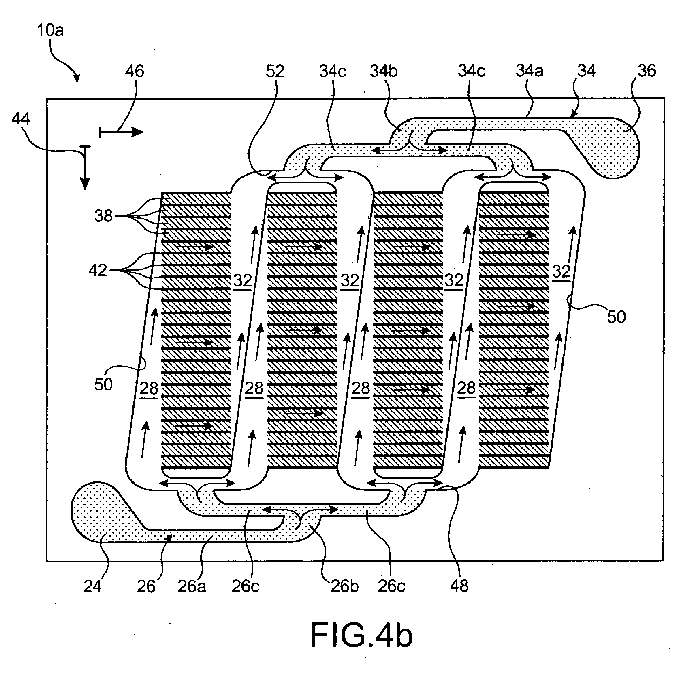

En référence à la figure 4b, on peut voir la plaque 10a selon un autre mode de réalisation préféré de la présente invention. Elle présente un grand nombre de points communs avec celle décrite précédemment, et, à cet égard, les éléments portant les mêmes références numériques correspondent à des éléments identiques ou similaires.

On peut apercevoir que la face de la plaque concernée présente la gravure d'un parallélogramme sensiblement similaire à celui décrit précédemment, intégrant en particulier les canaux élémentaires 38 revêtus de catalyseur, ainsi que les distributeurs et collecteurs secondaires 28, 32 en forme grossière de triangle.

En revanche, le distributeur principal 26 et le collecteur principal 34 ne sont plus intégrés au sein du parallélogramme, ses faces latérales sensiblement parallèles et opposées 48 et 52, de préférence orientées selon la direction 46, définissant à présent chacune alternativement des extrémités de distributeurs secondaires / collecteurs secondaires, et des extrémités de rangées 40.

Comme visible sur la figure 4b, le distributeur principal 26 présente un premier.canal 26a raccordé à l'entrée 24, et à l'extrémité duquel il est prévu une bifurcation 26b de laquelle sont issus deux canaux 26c alimentant chacun deux distributeurs secondaires 28 consécutifs selon la direction 46. Pour ce faire, l'extrémité de chaque canal 26c débouche au niveau de la face latérale 48, au droit d'une rangée 40 de part et d'autre de laquelle sont agencés les deux distributeurs secondaires 28 à alimenter.

D'une manière similaire, le collecteur principal 34 présente un premier canal 34a raccordé à la sortie 36, et à l'extrémité duquel il est prévu une ramification 34b de laquelle sont issus deux canaux 34c communiquant chacun avec deux collecteurs secondaires 32 consécutifs selon la direction 46. Pour ce faire, l'extrémité de chaque canal 34c débouche au niveau de la face latérale 52, au droit d'une rangée 40 de part et d'autre de laquelle sont agencés les deux collecteurs secondaires 32 concernés.

L'une des particularités de ce mode de réalisation préféré réside dans le fait que le distributeur principal 26 et du collecteur principal 34 peuvent être réalisés traversants sur la plaque, à savoir gravés sur toutes l'épaisseur de celle-ci, tout comme les entrée 24 et sortie 36. Ainsi, seuls le parallélogramme et les éléments situés en son sein, comme les canaux 38, sont réalisés débouchants et non traversants.

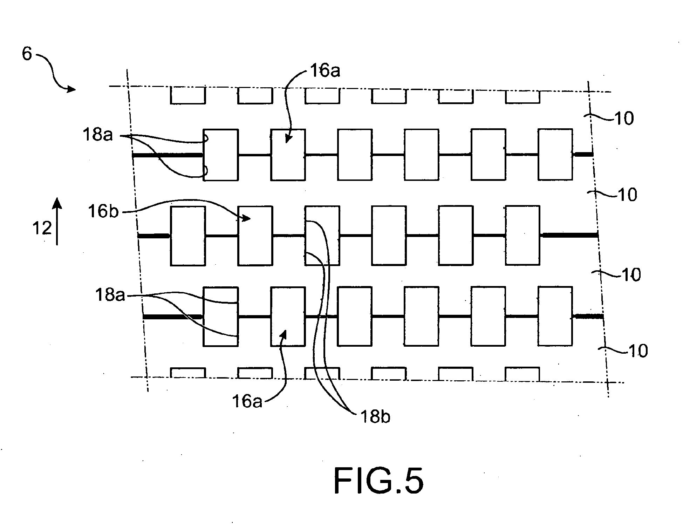

En référence à présent à la figure 5, on peut voir une partie d'un système de vaporeformage 6 susceptible d'équiper l'installation montrée sur la figure 1, et se présentant sous la forme d'un autre mode de réalisation préféré de la présente invention.

Dans ce mode de réalisation préféré, si les partie vaporeformage et partie brûleur du système 6 sont également définies par un empilement de plaques selon la direction 12, chacune des plaques 10 n'est plus exclusivement dédiée à la formation de l'une des deux parties précitées, mais présente deux faces opposées micro-structurées servant respectivement à former la partie vaporeformage et la partie brûleur. En effet, chacune des deux faces délimite une zone de circulation fluidique, dont la géométrie peut être identique ou similaire à celle décrite ci-dessus, l'une étant partiellement recouverte du catalyseur 18a assurant la combustion catalytique, et l'autre étant partiellement recouverte du catalyseur 18b assurant la réaction catalytique de vaporeformage.

Pour réaliser l'empilement de ses plaques 10 toutes sensiblement identiques, celles-ci sont alternativement retournées de sorte que la face micro-structurée revêtue du catalyseur 18a d'une plaque donnée se trouve en regard et en contact avec la face micro-structurée revêtue du catalyseur 18a de la plaque directement consécutive, et, de manière analogue, de sorte que la face micro-structurée revêtue du catalyseur 18b de la plaque donnée se trouve en regard et en contact avec la face micro-structurée revêtue du catalyseur 18b de la plaque directement consécutive.

Ainsi, chacune des premières et secondes zones de circulation fluidique 16a, 16b du système de vaporeformage 6 est constituée par deux faces micro-structurées situées en regard l'une de l'autre, et appartenant à deux plaques 10 distinctes directement consécutives.

Comme cela est visible sur la figure 5, il est prévu dans ce mode de réalisation préféré que la géométrie des premières zones de circulation fluidique 16a délimitées par les plaques 10 soit décalée, en vue prise selon la direction d'empilement 12, par rapport à la géométrie des secondes zones de circulation fluidique 16b délimitées par ces mêmes plaques 10, chacune de ces zones 16a, 16b disposant préférentiellement d'un réseau de canaux élémentaires disposés en rangées comme montré sur les figures 3 et 4a.

Cette solution technique visant à utiliser deux zones de circulation fluidique appartenant à deux plaques consécutives afin de former une unique zone de circulation du système de vaporeformage, permet globalement d'assurer un bon transfert thermique entre la réaction catalytique exothermique de combustion observée dans les premières zones 16a, et la réaction catalytique endothermique de vaporeformage rencontrée au sein des secondes zones 16b.

Bien entendu, diverses modifications peuvent être apportées par l'homme du métier à l'invention qui vient d'être décrite, uniquement à titre d'exemples non limitatifs.

## Revendications

1. Plaque (10, 10a, 10b) destinée à être intégrée dans un empilement de plaques d'un système d'échangeur de chaleur, ladite plaque délimitant sur l'une de ses deux faces une zone de circulation fluidique (20) au moins partiellement revêtue d'un catalyseur (18a, 18b) autorisant une réaction chimique catalytique au sein de cette zone, ladite zone de circulation fluidique (20) comprenant un réseau de canaux (30),
**caractérisée en ce que** ledit réseau de canaux (30) comporte une pluralité de canaux élémentaires (38) pratiqués sur ladite une des deux faces de la plaque et répartis en rangées (40), chaque rangée comportant une pluralité de parois latérales (42) en regard et espacées les unes des autres le long d'une première direction (44), de manière à ce que deux d'entre elles quelconques et directement consécutives délimitent l'un des canaux élémentaires (38) de ladite rangée, lesdites rangées (40) de canaux élémentaires (38) étant en regard et espacées les unes des autres le long d'une seconde direction (46) perpendiculaire à la première (44), lesdites première (44) et seconde directions (46) étant toutes les deux parallèles à ladite une des deux faces de la plaque,
**en ce que** dans ladite zone de circulation fluidique (20), seuls les canaux élémentaires (38) sont au moins partiellement revêtus dudit catalyseur (18a, 18b),
**en ce que** ladite zone de circulation fluidique (20) comporte également une entrée de fluide (24) et une sortie de fluide (36), un distributeur principal de fluide (26) débouchant dans ladite entrée, ainsi qu'un collecteur principal de fluide (34) débouchant dans ladite sortie,
et **en ce que** ladite zone de circulation fluidique (20) comporte de plus une pluralité de distributeurs secondaires de fluide (28) chacun débouchant dans ledit distributeur principal de fluide (26) et situé entre deux rangées (40) de canaux élémentaires directement consécutives, ainsi qu'une pluralité de collecteurs secondaires de fluide (32) chacun débouchant dans ledit collecteur principal de fluide (34) et également situé entre deux rangées (40) de canaux élémentaires directement consécutives.

2. Plaque (10, 10a, 10b) selon la revendication 1, **caractérisée en ce que** ledit distributeur principal (26) et ledit collecteur principal (34) s'étendent chacun globalement selon ladite seconde direction (46), et se situent respectivement au niveau de deux extrémités opposées, considérées selon ladite première direction (44), dudit réseau de canaux (30) formé par la pluralité de rangées (40).

3. Plaque (10, 10a, 10b) selon la revendication 1 ou la revendication 2, **caractérisée en ce qu'**entre deux rangées (40) de canaux élémentaires directement consécutives, le distributeur secondaire de fluide (28) destiné à alimenter en fluide les canaux élémentaires (38) de l'une des deux rangées, et le collecteur secondaire de fluide (32) destiné à collecter le fluide s'échappant des canaux élémentaires (38) de l'autre des deux rangées (40), sont séparés par un élément de paroi (50) incliné dans lesdites première et seconde directions (44, 46).

4. Plaque (10, 10a, 10b) selon la revendication 3, **caractérisée en ce que** ledit élément de paroi (50) est raccordé à une paroi latérale (42) de l'une des deux rangées qui se situe la plus à l'extrémité de cette rangée selon la première direction (44), et également raccordé à une paroi latérale (42) de l'autre des deux rangées qui se situe la plus à l'extrémité de cette autre rangée selon une direction opposée à ladite première direction (44).

5. Plaque (10, 10a, 10b) selon l'une quelconque des revendications précédentes, **caractérisée en ce que** lesdits distributeur et collecteur principaux (26, 34), et distributeurs et collecteurs secondaires (28, 32), disposent chacun d'une forme sensiblement triangulaire en vue de dessus.

6. Plaque (10, 10a, 10b) selon l'une quelconque des revendications précédentes, **caractérisée en ce que** l'entrée de fluide (24) et la sortie de fluide (36) se situent respectivement au niveau de deux extrémités opposées, considérées selon ladite seconde direction (46), dudit réseau de canaux (30) formé par la pluralité de rangées (40).

7. Plaque (10, 10a, 10b) selon l'une quelconque des revendications précédentes, **caractérisée en ce que** chaque canal élémentaire (38) dispose d'une largeur comprise entre environ 0,1 et 1 mm.

8. Plaque (10, 10a, 10b) selon l'une quelconque des revendications précédentes, **caractérisée en ce que** chaque canal élémentaire (38) du réseau de canaux est au moins partiellement revêtu dudit catalyseur (18a, 18b).

9. Plaque (10, 10a, 10b) selon l'une quelconque des revendications précédentes, **caractérisée en ce que** ledit catalyseur (18a, 18b) est réalisé dans un matériau pris parmi le groupe constitué des alliages fer/nickel, des polymères et des céramiques.

10. Plaque (10) selon l'une quelconque des revendications précédentes, **caractérisée en ce que** l'autre des deux faces de ladite plaque délimite également une autre zone de circulation fluidique.

11. Plaque (10) selon l'une quelconque des revendications 1 à 9, **caractérisée en ce que** l'autre des deux faces de ladite plaque délimite également une autre zone de circulation fluidique au moins partiellement revêtue d'un catalyseur (18a, 18b) autorisant une réaction chimique catalytique au sein de cette autre zone.

12. Système d'échangeur de chaleur (6) comprenant un empilement de plaques (10, 10a, 10b) formant en alternance, selon une direction d'empilement des plaques (12), une première zone de circulation fluidique (16a) et une seconde zone de circulation fluidique (16b), ladite première zone de circulation fluidique (16a) étant au moins partiellement revêtue d'un catalyseur (18a) autorisant une réaction chimique catalytique au sein de cette première zone,
**caractérisé en ce qu'**au moins l'une desdites plaques (10, 10a, 10b) de l'empilement est une plaque selon l'une quelconque des revendications précédentes, permettant à l'aide de sa zone de circulation fluidique (20), de former au moins partiellement l'une des premières zones de circulation fluidique (16a) du système d'échangeur.

13. Système d'échangeur de chaleur (6) selon la revendication 12, **caractérisé en ce que** chaque seconde zone de circulation fluidique (16b) est également au moins partiellement revêtue d'un catalyseur (18b) autorisant une réaction chimique catalytique au sein de cette seconde zone.

14. Système de vaporeformage (6) **caractérisé en ce qu'**il comporte un système d'échangeur selon la revendication 12 ou la revendication 13, ce système de vaporeformage étant conçu de sorte qu'une réaction chimique catalytique exothermique se produise au sein de chaque première zone de circulation fluidique (16a), et de sorte qu'une réaction endothermique de vaporeformage visant à générer de l'hydrogène se produise au sein de chaque seconde zone de circulation fluidique (16b).

15. Instillation de pile à combustible (1) comprenant une pile à combustible (2) et un système de vaporeformage (6) destiné à produire de l'hydrogène afin de le délivrer à ladite pile à combustible, **caractérisée en ce que** ledit système de vaporeformage (6) est un système selon la revendication 14.

## Patentansprüche

1. Platte (10, 10a, 10b) zum Integrieren in einen Plattenstapel eines Wärmetauschsystems, wobei die Platte auf einer ihrer beiden seiten eine Fluidumlaufzone (20) begrenzt, die mindestens teilweise mit einem Katalysator (18a, 18b) beschichtet ist, der innerhalb dieser Zone eine katalytische chemische Reaktion zulässt, wobei die Fluidumlaufzone (20) ein Kanalnetz (30) umfasst,
**dadurch gekennzeichnet, dass** das Kanalnetz (30) eine Vielzahl von Elementarkanälen (38) umfasst, die auf der einen der beiden Seiten der Platte eingerichtet und auf Reihen (40) verteilt sind, wobei jede Reihe eine Vielzahl von Seitenwänden (42) umfasst, die sich gegenüberliegen und voneinander in einer ersten Richtung (44) beabstandet sind, so dass zwei beliebige davon, die direkt aufeinanderfolgen, einen der Elementarkanäle (38) der Reihe begrenzen, wobei die Reihen (40) von Elementarkanälen (38) einander gegenüberliegen und in einer zweiten Richtung (46) voneinander beabstandet sind, die zu der ersten (44) rechtwinklig ist, wobei die ersten (44) und zweiten Richtungen (46) beide parallel zu der einen der beiden seiten der Platte sind,
und dass in der Fluidumlaufzone (20) nur die Elementarkanäle (38) mindestens teilweise mit dem Katalysator (18a, 18b) beschichtet sind,
dass die Fluidumlaufzone (20) auch einen Fluideingang (24) und einen Fluidausgang (36), einen Fluidhauptverteiler (26), der in den Eingang einmündet, sowie einen Fluidhauptabscheider (34), der in den Ausgang einmündet, umfasst,
und dass die Fluidumlaufzone (20) zudem eine Vielzahl von Fluidnebenverteilern (28) umfasst, von denen jeder in den Fluidhauptverteiler (26) einmündet und sich zwischen zwei Reihen (40) von direkt aufeinanderfolgenden Elementarkanälen befindet, sowie eine Vielzahl von Fluidnebenabscheidern (32) umfasst, von denen jeder in den Fluidhauptabscheider (34) einmündet und sich ebenfalls zwischen zwei Reihen (40) von direkt aufeinanderfolgenden Elementarkanälen befindet.

2. Platte (10, 10a, 10b) nach Anspruch 1, **dadurch gekennzeichnet, dass** der Hauptverteiler (26) und der Hauptabscheider (34) sich jeweils insgesamt in der zweiten Richtung (46) erstrecken und sich jeweils an zwei gegenüberliegenden Enden, in der ersten Richtung (44) gesehen, des Kanalnetzes (30) befinden, das durch die Vielzahl von Reihen (40) gebildet wird.

3. Platte (10, 10a, 10b) nach Anspruch 1 oder 2, **dadurch gekennzeichnet, dass** zwischen zwei Reihen (40) von direkt aufeinanderfolgenden Elementarkanälen der Fluidnebenabscheider (28), der dazu gedacht ist, die Elementarkanäle (38) einer der beiden Reihen mit Fluid zu versorgen, und der Fluidnebenabscheider (32), der dazu gedacht ist, das Fluid aufzufangen, das aus den Elementarkanälen (38) der anderen der beiden Reihen (40) ausläuft, durch ein Wandelement (50) getrennt sind, das in den ersten und zweiten Richtungen (44, 46) geneigt ist.

4. Platte (10, 10a, 10b) nach Anspruch 3, **dadurch gekennzeichnet, dass** das Wandelement (50) mit einer Seitenwand (42) einer der beiden Reihen verbunden ist, die sich am äußersten Ende dieser Reihe in der ersten Richtung (44) befindet, und auch mit einer Seitenwand (42) der anderen der beiden Reihen verbunden ist, die sich am äußersten Ende dieser anderen Reihe in einer Richtung befindet, die der ersten Richtung (44) entgegengesetzt ist.

5. Platte (10, 10a, 10b) nach einem der vorhergehenden Ansprüche, **dadurch gekennzeichnet, dass** die Hauptverteiler und Hauptabscheider (26, 34) und die Nebenverteiler und Nebenabscheider (28, 32) jeweils eine von oben gesehen im Wesentlichen dreieckige Form aufweisen.

6. Platte (10, 10a, 10b) nach einem der vorhergehenden Ansprüche, **dadurch gekennzeichnet, dass** sich der Fluideingang (24) und der Fluidausgang (36) jeweils an zwei gegenüberliegenden Enden, in der zweiten Richtung (46) gesehen, des Kanalnetzes (30) befinden, das durch die Vielzahl von Reihen (40) gebildet wird.

7. Platte (10, 10a, 10b) nach einem der vorhergehenden Ansprüche, **dadurch gekennzeichnet, dass** jeder Elementarkanal (38) über eine Breite verfügt, die zwischen ungefähr 0,1 und 1 mm liegt.

8. Platte (10, 10a, 10b) nach einem der vorhergehenden Ansprüche, **dadurch gekennzeichnet, dass** jeder Elementarkanal (38) des Kanalnetzes mindestens teilweise mit dem Katalysator (18a, 18b) beschichtet ist.

9. Platte (10, 10a, 10b) nach einem der vorhergehenden Ansprüche, **dadurch gekennzeichnet, dass** der Katalysator (18a, 18b) aus einem Material ausgebildet ist, das aus der Gruppe ausgewählt wird, die aus Eisen-/Nickellegierungen, Polymeren und Keramik besteht.

10. Platte (10) nach einem der vorhergehenden Ansprüche, **dadurch gekennzeichnet, dass** die andere der beiden Seiten der Platte ebenfalls eine andere Fluidumlaufzone begrenzt.

11. Platte (10) nach einem der Ansprüche 1 bis 9, **dadurch gekennzeichnet, dass** die andere der beiden Seiten der Platte ebenfalls eine andere Fluidumlaufzone begrenzt, die mindestens teilweise mit einem Katalysator (18a, 18b) beschichtet ist, der eine katalytische chemische Reaktion innerhalb dieser anderen Zone zulässt.

12. Wärmetauschsystem (6), umfassend einen Plattenstapel (10, 10a, 10b), der abwechselnd in einer Stapelrichtung der Platten (12) eine erste Fluidumlaufzone (16a) und eine zweite Fluidumlaufzone (16b) bildet, wobei die erste Fluidumlaufzone (16a) mindestens teilweise mit einem Katalysator (18a) beschichtet ist, der eine katalytische chemische Reaktion innerhalb dieser ersten Zone zulässt,
**dadurch gekennzeichnet, dass** mindestens eine der Platten (10, 10a, 10b) des Stapels eine Platte nach einem der vorhergehenden Ansprüche ist, die es anhand ihrer Fluidumlaufzone (20) ermöglicht, mindestens teilweise die eine der ersten Fluidumlaufzonen (16a) des Austauschsystems zu bilden.

13. Wärmetauschsystem (6) nach Anspruch 12, **dadurch gekennzeichnet, dass** jede zweite Fluidumlaufzone (16b) ebenfalls mindestens teilweise mit einem Katalysator (18b) beschichtet ist, der eine katalytische chemische Reaktion innerhalb dieser zweiten Zone zulässt.

14. Dampfreformierungssystem (6), **dadurch gekennzeichnet, dass** es ein Austauschsystem nach Anspruch 12 oder 13 umfasst, wobei dieses Dampfreformierungssystem derart ausgelegt ist, dass innerhalb jeder ersten Fluidumlaufzone (1 6a) eine exotherme katalytische chemische Reaktion erfolgt, und dass eine endotherme Reaktion der Dampfreformierung, die darauf abzielt, Wasserstoff zu erzeugen, innerhalb jeder zweiten Fluidumlaufzone (16b) erfolgt.

15. Brennstoffzellenanlage (1), umfassend eine Brennstoffzelle (2) und ein Dampfreformierungssystem (6), das dazu gedacht ist, Wasserstoff zu erzeugen, um diesen an die Brennstoffzelle abzugeben, **dadurch gekennzeichnet, dass** das Dampfreformierungssystem (6) ein System nach Anspruch 14 ist.

## Claims

1. Plate (10, 10a, 10b) intended to be integrated in a stack of plates in a heat exchanger system, said plate delimiting on one of its two faces a fluid circulation zone (20) which is at least partially coated with a catalyst (18a, 18b) allowing a catalytic chemical reaction within this zone, said fluid circulation zone (20) comprising a network of channels (30),
**characterised in that** said network of channels (30) comprises a plurality of basic channels (38) distributed in rows (40), each row comprising a plurality of side walls (42) arranged opposite one another and spaced apart from one another in a first direction (44), so that any two directly consecutive side walls delimit one of the basic channels (38) of said row, said rows (40) of basic channels (38) being arranged opposite one another and spaced apart from one another in a second direction (46) which is perpendicular to the first (44),
**in that** in said fluid circulation zone (20), only the basic channels (38) are at least partially coated with said catalyst (18a, 18b),
**in that** said fluid circulation zone (20) also comprises a fluid inlet (24) and a fluid outlet (36), a main fluid distributor (26) opening into said inlet and a main fluid collector (34) opening into said outlet, and **in that** said fluid circulation zone (20) additionally comprises a plurality of secondary fluid distributors (28), each opening into said main fluid distributor (26) and located between two directly consecutive rows (40) of basic channels, and also a plurality of secondary fluid collectors (32), each opening into said main fluid collector (34) and also located between two directly consecutive rows (40) of basic channels.

2. Plate (10, 10a, 10b) according to claim 1, **characterised in that** said main distributor (26) and said main collector (34) each extend generally in said second direction (46) and are located respectively at two opposite ends, as seen in said first direction (44), of said network of channels (30) formed by the plurality of rows (40).

3. Plate (10, 10a, 10b) according to claim 1 or claim 2, **characterised in that**, between two directly consecutive rows (40) of basic channels, the secondary fluid distributor (28) intended to supply fluid to the basic channels (38) of one of the two rows, and the secondary fluid collector (32) intended to collect the fluid escaping from the basic channels (38) of the other of the two rows (40), are separated by a wall element (50) which is inclined in said first and second directions (44, 46).

4. Plate (10, 10a, 10b) according to claim 3, **characterised in that** said wall element (50) is connected to a side wall (42) of one of the two rows which is located closest to the end of this row in the first direction (44), and is also connected to a side wall (42) of the other of the two rows which is located closest to the end of this other row in a direction opposite said first direction (44).

5. Plate (10, 10a, 10b) according to any one of the preceding claims, **characterised in that** said main distributor and collector (26, 34), and secondary distributors and collectors (28, 32), each have a substantially triangular shape in plan view.

6. Plate (10, 10a, 10b) according to any one of the preceding claims, **characterised in that** the fluid inlet (24) and the fluid outlet (36) are located respectively at two opposite ends, as seen in said second direction (46), of said network of channels (30) formed by the plurality of rows (40).

7. Plate (10, 10a, 10b) according to any one of the preceding claims, **characterised in that** each basic channel (38) has a width of between approximately 0.1 and 1 mm.

8. Plate (10, 10a, 10b) according to any one of the preceding claims, **characterised in that** each basic channel (38) of the network of channels is at least partially coated with said catalyst (18a, 18b).

9. Plate (10, 10a, 10b) according to any one of the preceding claims, **characterised in that** said catalyst (18a, 18b) is made from a material selected from the group consisting of iron-nickel alloys, polymers and ceramics.

10. Plate (10) according to any one of the preceding claims, **characterised in that** the other of the two faces of said plate also delimits another fluid circulation zone.

11. Plate (10) according to any one of claims 1 to 9, **characterised in that** the other of the two faces of said plate also delimits another fluid circulation zone which is at least partially coated with a catalyst (18a, 18b) allowing a catalytic chemical reaction within this other zone.

12. Heat exchanger system (6) comprising a stack of plates (10, 10a, 10b) which alternately form, in a direction of stacking of the plates (12), a first fluid circulation zone (16a) and a second fluid circulation zone (16b), said first fluid circulation zone (16a) being at least partially coated with a catalyst (18a) allowing a catalytic chemical reaction within this first zone,
**characterised in that** at least one of said plates (10, 10a, 10b) of the stack is a plate according to any one of the preceding claims, making it possible by means of its fluid circulation zone (20) to form at least partially one of the first fluid circulation zones (16a) of the heat exchanger system.

13. Heat exchanger system (6) according to claim 12, **characterised in that** each second fluid circulation zone (16b) is also at least partially coated with a catalyst (18b) allowing a catalytic chemical reaction within this second zone.

14. Steam reforming system (6), **characterised in that** it comprises a heat exchanger system according to claim 12 or claim 13, this steam reforming system being designed such that an exothermic catalytic chemical reaction takes place within each first fluid circulation zone (16a), and such that an endothermic steam reforming reaction intended to generate hydrogen takes place within each second fluid circulation zone (16b).

15. Fuel cell installation (1) comprising a fuel cell (2) and a steam reforming system (6) intended to produce hydrogen so as to deliver it to said fuel cell, **characterised in that** said steam reforming system (6) is a system according to claim 14.
